# EUROPEAN PATENT APPLICATION

(11) **EP 4 266 098 A1**
(43) Date of publication of application: **25.10.2023**
(21) Application number: 21906523.2
(22) Date of filing: 10.12.2021
(51) Int. Cl.: G02B 6/036

(54) **OPTICAL FIBER, METHOD FOR DESIGNING OPTICAL FIBER, AND METHOD FOR MANUFACTURING OPTICAL FIBER**

(30) Priority: 15.12.2020 JP 2020207898
(71) Applicant: FURUKAWA ELECTRIC CO., LTD., Chiyoda-ku Tokyo 100-8322 (JP)
(72) Inventor: MUKASA, Kazunori, Tokyo 100-8322 (JP)
(74) Representative: SSM Sandmair
(86) International application number: PCT/JP2021/045572
(87) International publication number: WO 2022/131161

(57) **Abstract**

An optical fiber that includes a core portion, a side core layer that surrounds an outer periphery of the core portion, and a cladding portion that surrounds an outer periphery of the side core layer, and in which Δ1>ΔClad>Δ2 and 0>Δ2 hold, where Δ1 is an average maximum relative refractive-index difference of the core portion with respect to an average refractive index of the cladding portion, Δ2 is a relative refractive-index difference of an average refractive index of the side core layer with respect to the average refractive index of the cladding portion, and ΔClad is a relative refractive-index difference of the average refractive index of the cladding portion with respect to pure silica glass, an effective core area at a wavelength of 1550 nm is equal to or larger than 100 µm² and equal to or less than 160 µm², (Δ1-Δ2) is between 0.36% and 0.54%, inclusive, Δ2 is between -0.23% and -0.08%, inclusive, b/a is between 2.5 and 3.9, inclusive, when a core diameter of the core portion is 2a and an outer diameter of the side core layer is 2b, and the (Δ1-Δ2) is a value such that a cutoff wavelength is within 10 nm from a lowest value.

## Description

### Field

The present invention relates to an optical fiber, a method of designing the optical fiber, and a method of manufacturing the optical fiber.

### Background

An optical fiber using a W-type refractive index profile with is actively studied (Patent Literatures 1 to 4). The W-type refractive index profile is used to increase, for example, an effective core area of the optical fiber. In the optical fiber having a large effective core area, an occurrence of non-linear optical effects is prevented in the optical fiber, so that it is possible to preferably use the optical fiber as, for example, a long distance optical transmission line. In addition, the effective core area is sometimes referred to as Aeff.

### Citation List

### Patent Literature

Patent Literature 1: Japanese Patent No. 6500451
Patent Literature 2: Japanese Patent No. 6527973
Patent Literature 3: Japanese Laid-open Patent Publication No. 2003-66259
Patent Literature 4: Japanese Laid-open Patent Publication No. 2009-122277

### Summary

### Technical Problem

In general, the effective core area and a cutoff wavelength have a trade-off relationship, and the cutoff wavelength tends to be high in a case of an increase in the effective core area. However, to implement single mode transmission with a wavelength bandwidth used for the optical transmission, in some cases, there is a need to decrease the cutoff wavelength of the optical fiber. Accordingly, there is room for consideration of compatibility between an increase in the effective core area and a decrease in the cutoff wavelength.

Accordingly, the present invention has been conceived in light of the circumstances described above and an object thereof is to provide an optical fiber, a method of designing the optical fiber, and a method of manufacturing the optical fiber that has a low cutoff wavelength and in which the effective core area is increased.

### Solution to Problem

To solve the problem described above and to achieve the object, an optical fiber according to one aspect of the present invention includes a core portion; a side core layer that surrounds an outer periphery of the core portion; and a cladding portion that surrounds an outer periphery of the side core layer, and in which Δ1>ΔClad>Δ2 and 0>Δ2 hold, where Δ1 is an average maximum relative refractive-index difference of the core portion with respect to an average refractive index of the cladding portion, Δ2 is a relative refractive-index difference of an average refractive index of the side core layer with respect to the average refractive index of the cladding portion, and ΔClad is a relative refractive-index difference of the average refractive index of the cladding portion with respect to pure silica glass, an effective core area at a wavelength of 1550 nm is equal to or larger than 100 µm² and equal to or less than 160 µm², (Δ1-Δ2) is equal to or larger than 0.36% and equal to or less than 0.54%, Δ2 is equal to or larger than -0.23% and equal to or less than -0.08%, b/a is equal to or larger than 2.5 and equal to or less than 3.9 when a core diameter of the core portion is 2a and an outer diameter of the side core layer is 2b, and the (Δ1-Δ2) is a value such that a cutoff wavelength is within 10 nm from a lowest value.

In the optical fiber, the (Δ1-Δ2) may satisfy - 0.0946(b/a)³+0.9962(b/a)²-3.5477(b/a)+4.6605≥(Δ1-Δ2)≥-0.0840(b/a)³+0.8739(b/a)²-3.0106(b/a)+3.7956.

In the optical fiber, the (Δ1-Δ2) may be equal to or larger than 0.37% and equal to or less than 0.44%.

In the optical fiber, the b/a may be equal to or larger than 2.8 and equal to or less than 3.8.

A method of designing an optical fiber according to one aspect of the present invention is a method of designing an optical fiber that includes a core portion, a side core layer that surrounds an outer periphery of the core portion, and a cladding portion that surrounds an outer periphery of the side core layer, and in which Δ1>ΔClad>Δ2 and 0>Δ2 hold, where Δ1 is an average maximum relative refractive-index difference of the core portion with respect to an average refractive index of the cladding portion, Δ2 is a relative refractive-index difference of an average refractive index of the side core layer with respect to the average refractive index of the cladding portion, and ΔClad is a relative refractive-index difference of the average refractive index of the cladding portion with respect to pure silica glass. The method includes: setting (Δ1-Δ2) to a value such that a cutoff wavelength is within 10 nm from a lowest value in accordance with a value of b/a when a core diameter of the core portion is 2a, and an outer diameter of the side core layer is 2b; and setting, as a structure parameter, the Δ1, the Δ2, the ΔClad, the core diameter of the core portion, and the outer diameter of the side core layer such that an optical property exhibits a desired property under a condition of the set (Δ1-Δ2).

A method of manufacturing an optical fiber according to one aspect of the present invention is a method of manufacturing an optical fiber such that the structure parameter that has been set in the method of designing the optical fiber is satisfied.

### Advantageous Effects of Invention

According to the present invention, an advantage is provided in that it is possible to implement an optical fiber that has a low cutoff wavelength and in which the effective core area is increased.

### Brief Description of Drawings

FIG. 1 is a schematic cross-sectional view of an optical fiber according to an embodiment.
FIG. 2 is a schematic view of a refractive index profile of the optical fiber according to the embodiment.
FIG. 3 is a diagram illustrating one example of a relationship between (Δ1-Δ2) and λcc.
FIG. 4 is a diagram illustrating one example of a relationship between (Δ1-Δ2) and a bending loss.
FIG. 5 is a diagram illustrating one example of a relationship between (Δ1-Δ2) and a transmission loss.
FIG. 6 is a diagram illustrating one example of a preferable condition about (Δ1-Δ2) and b/a.

### Description of Embodiments

Embodiments of the present invention will be described in detail below with reference to the drawings. The present invention is not limited by the embodiments described below. Furthermore, in each of the drawings, the same or corresponding component elements are appropriately denoted by the same reference symbols. In addition, in the present specification, a cutoff wavelength or an effective cutoff wavelength indicates a cable cutoff wavelength (λcc) that is defined by ITU-T G.650.1 of the International Telecommunication Union (ITU). Moreover, other terms that are not specifically defined in the present specification conform to definitions and measurement methods described in G.650.1 and G.650.2.

### (Embodiment)

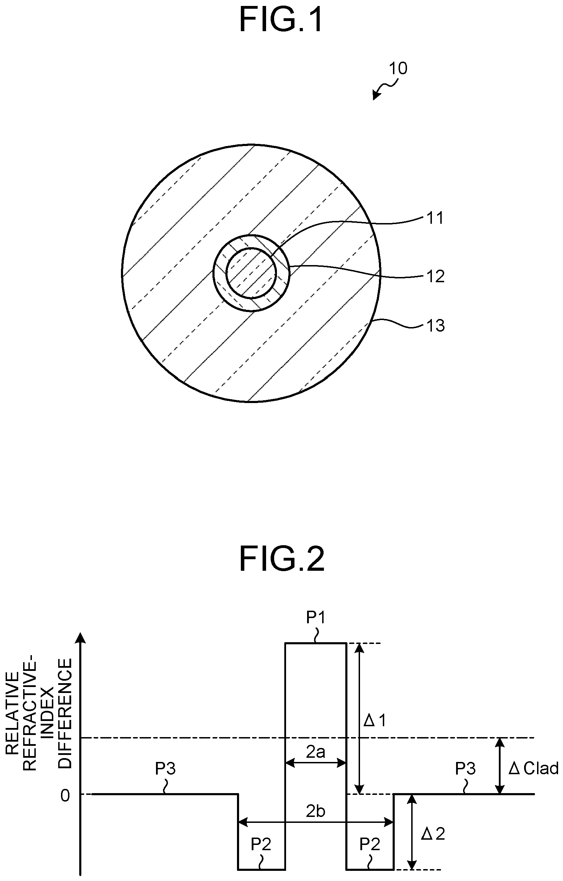

FIG. 1 is a schematic cross-sectional view of an optical fiber according to an embodiment. An optical fiber 10 is made of silica based glass, and includes a core portion 11, a side core layer 12 that surrounds an outer periphery of the core portion 11, and a cladding portion 13 that surrounds an outer periphery of the side core layer 12. Furthermore, the optical fiber 10 may also include a coating layer that surrounds an outer periphery of the cladding portion 13.

FIG. 2 is a diagram illustrating a refractive index profile of the optical fiber 10. A profile P1 is a refractive index profile of the core portion 11, and has a shape of what is called a step-type refractive index profile. A profile P2 is a refractive index profile of the side core layer 12. A profile P3 is a refractive index profile of the cladding portion 13.

Here, in addition to the shape of the step-type refractive index profile that is a geometrically ideal shape, the refractive index profile of the core portion 11 has sometimes an uneven shape due to a manufacturing property instead of a flat shape at the top portion, or has a shape having a tail from the top portion. In this case, the refractive index in a substantially flat area at the top portion of the refractive index profile within a range of a core diameter 2a of the core portion 11 from the viewpoint of the manufacturing design serves as an indicator for determining Δ1.

A structure parameter of the optical fiber 10 will be described. As described above, the core diameter of the core portion 11 is 2a. In addition, the outer diameter of the side core layer 12 is 2b.

Furthermore, a relative refractive-index difference of an average maximum refractive index (the maximum relative refractive-index difference) of the core portion 11 with respect to an average refractive index of the cladding portion 13 is Δ1. A relative refractive-index difference of an average refractive index of the side core layer 12 with respect to an average refractive index of the cladding portion 13 is Δ2. In addition, the average maximum refractive index of the core portion 11 mentioned here is an average value of the refractive index in the substantially flat area at the top portion of the refractive index profile in the radial direction. The average refractive index of the side core layer 12 or the cladding portion 13 mentioned here is an average value of the refractive index of the refractive index profile in the radial direction.

Furthermore, the relative refractive-index difference of the average refractive index of the cladding portion 13 with respect to a refractive index of the pure silica glass is ΔClad. Here, the pure silica glass mentioned here is extremely high purity silica glass that does not practically contain a dopant that changes the refractive index and that has the refractive index of about 1.444 at the wavelength of 1550 nm. FIG. 2 illustrates, by using the dash-dot-dash line, the relative refractive-index difference of the pure silica glass with respect to the average refractive index of the cladding portion 13.

Regarding Δ1, Δ2, and ΔClad, Δ1>ΔClad>Δ2 and 0>Δ2 hold. In other words, the optical fiber 10 has a W-type refractive index profile. Furthermore, FIG. 2 illustrates the case where the ΔClad is less than 0%; however, ΔClad may be equal to or larger than 0%.

Constitutional materials of the optical fiber 10 will be described below. The core portion 11 is made of silica based glass including a dopant that is used to adjust the refractive index and that increases the refractive index. For example, the core portion 11 contains, as a dopant, at least one of germanium (Ge), chlorine (Cl), fluorine (F), potassium (K), and sodium (Na), for example, two or more of germanium (Ge), chlorine (Cl), fluorine (F), potassium (K), and sodium (Na). Fluorine (F) is a dopant that decreases the refractive index of silica glass, whereas germanium (Ge), chlorine (Cl), fluorine (F), potassium (K), and sodium (Na) are dopants each of which increases the refractive index of silica glass. Furthermore, the core portion 11 may be made of pure silica glass.

In contrast, the side core layer 12 and the cladding portion 13 are made of silica based glass doped with only F and Cl, only F, or only Cl. As a result of the refractive index being adjusted by these dopants, Δ1>ΔClad>Δ2 and 0>Δ2 hold, and, furthermore, a preferable range of Δ1, Δ2, and ΔClad, which will be described later, is implemented. In addition, the cladding portion 13 may be made of pure silica glass.

### (Preferable structure parameter)

In the following, structure parameters of Δ1, Δ2, ΔClad, 2a, and 2b from among the structure parameters of the optical fiber 10 according to the present embodiment will be described.

To implement the optical fiber 10 having a large effective core area and a low cutoff wavelength, inventors of the present invention has found out the following result as a result of earnestly studying the structure parameters of the W-type refractive index profile and the optical properties obtained by the structure parameters.

In other words, in a case of the W-type refractive index profile, the average refractive index sensed by light is different between in the case where a spread of the optical field propagating through the optical fiber mainly stays in the core portion and in the case where the optical field propagating through the optical fiber spreads over the side core layer, so that it is considered that behaviors of confinement of light related to, in particular, the higher-order propagation modes are also different. Furthermore, it is considered that the difference between these average refractive indices also affects the behaviors of λcc. In addition, it is considered that, if (Δ1-Δ2) is changed as a parameter, there may be a value that takes a lowest value of λcc. In particular, in an optical fiber having a relatively large effective core area (Aeff), the optical field spreading over the side core layer tends to be increased, so that it is considered that a circumstance in which λcc takes the lowest value may likely to occur when (Δ1-Δ2) is changed.

Accordingly, regarding the optical fiber 10, a change in λcc obtained when (Δ1-Δ2) is changed under the condition that b/a for several values is examined by using simulation calculation or the like. Furthermore, the examination has been performed in the range of 0.21 to 0.29% for Δ1 and in the range of -0.23 to -0.08% for Δ2 for all of the values that are set for b/a. As a result, the following results are obtained.

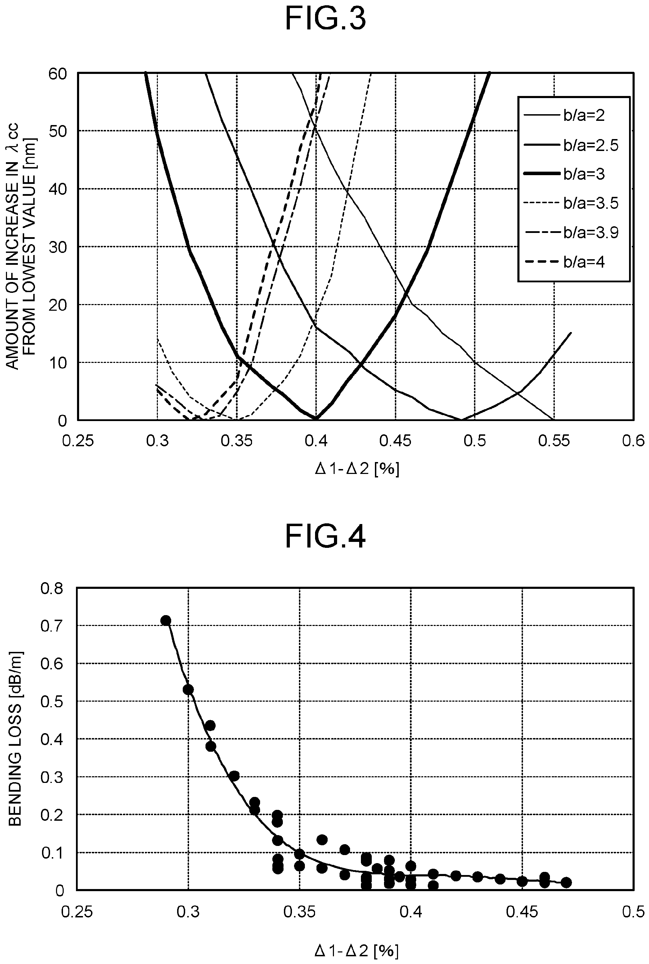

FIG. 3 is a diagram illustrating one example of a relationship between (Δ1-Δ2) and λcc. FIG. 3 illustrates a change in λcc in the case where b/a is set to 2, 2.5, 3, 3.5, or 4 and (Δ1-Δ2) is changed from 0.3% to 0.55% or 0.56%. Furthermore, the horizontal axis indicates (Δ1-Δ2) [%], and the vertical axis indicates an amount of increase in λcc from the lowest value. Furthermore, in the case where the values used for b/a are different, the lowest values of λcc also indicate different values. In addition, in the case where b/a is 2, λcc continues to be decreased even when (Δ1-Δ2) is increased to 0.55%, and the existence of the lowest value is not confirmed. Accordingly, in the case where b/a is 2, it needs to be noted that the vertical axis does not indicate an amount of increase in λcc from the lowest value, but indicates an amount of increase from a value of λcc in the case where (Δ1-Δ2) is 0.55%.

As can be seen from FIG. 3, (Δ1-Δ2) has a close relationship with λcc, and it has been confirmed that λcc is changed into a convex downward curved shape in the case where (Δ1-Δ2) is changed, and it has been confirmed that a value of (Δ1-Δ2) may sometimes indicates that λcc is the lowest value. In addition, it has been confirmed that λcc is large even if (Δ1-Δ2) is too large or too small with respect to the value of (Δ1-Δ2) that indicates the lowest value of λcc.

It is possible to reduce λcc of the optical fiber by appropriately setting (Δ1-Δ2). This means that it is possible to broaden the wavelength bandwidth capable of performing transmission in a single mode, and it is preferable in terms of a broader bandwidth of the wavelength bandwidth used in optical transmission. Furthermore, in the case where λcc of the optical fiber can be reduced to a value lower than a desired value by appropriately setting (Δ1-Δ2), the core diameter can be set to large until λcc reaches the desired value, so that it is possible to implement an increase in Aeff and improvement of the macrobending property.

Furthermore, as illustrated in FIG. 3, a change in λcc with respect to (Δ1-Δ2) is relatively gradual in the vicinity of (Δ1-Δ2) in which λcc takes the lowest value. Therefore, if (Δ1-Δ2) is set to a value in which λcc takes the lowest value or is set to a value in the vicinity thereof, it is possible to relatively reduce a deviation from the set value of λcc in also the case where the value of (Δ1-Δ2) deviates from the set value caused by an error, such as a manufacturing error. From this point of view, if (Δ1-Δ2) is set to a value in which λcc is within 10 nm from the lowest value, the manufacturing error is less likely to affect λcc, and it is thus possible to implement stable manufacturability.

From the description above, the optical fiber 10 according to the present embodiment is an optical fiber having a value in which λcc is within 10 nm from the lowest value with respect to (Δ1-Δ2).

Furthermore, it is preferable that the optical fiber 10 is constituted such that (Δ1-Δ2) is equal to or larger than 0.36% in terms of a bending loss. Here, the bending loss means a bending loss at the wavelength of 1550 nm that is obtained when the optical fiber 10 is bent at a diameter of 30 mm unless otherwise stated. Furthermore, such a bending loss is sometimes referred to as a macrobending loss, and the condition that is used to bend the optical fiber 10 at the diameter of 30 mm is sometimes referred to as "30 mmφ".

The bending loss will be described with reference to FIG. 4. FIG. 4 is a diagram illustrating one example of a relationship between (Δ1-Δ2) and the bending loss. Furthermore, Δ1, Δ2, 2a, and b/a are set to cover various combinations. As can be understood from FIG. 4, the bending loss is sharply increased as (Δ1-Δ2) is decreased below 0.36%. In addition, the solid line illustrated in FIG. 4 is a curved line indicating one example of a fitting function obtained with respect to data points by using a least squares method. The fitting function is a quartic function of (Δ1-Δ2), and is specifically a function of the form y=2126.5x⁴-3638.2x³+2328.4x²-660.83x+70.245, which indicates that a bending loss is sharply increased as (Δ1-Δ2) is decreased to 0.36% or below. Therefore, in terms of a reduction in a bending loss, it is preferable that (Δ1-Δ2) is equal to or larger than 0.36%. Furthermore, if (Δ1-Δ2) is equal to or larger than 0.37%, it is possible to more reliably reduce the bending loss.

In addition, in terms of a transmission loss, regarding the optical fiber 10, it is preferable that (Δ1-Δ2) is equal to or less than 0.54%, and is more preferable that (Δ1-Δ2) is equal to or less than 0.44%.

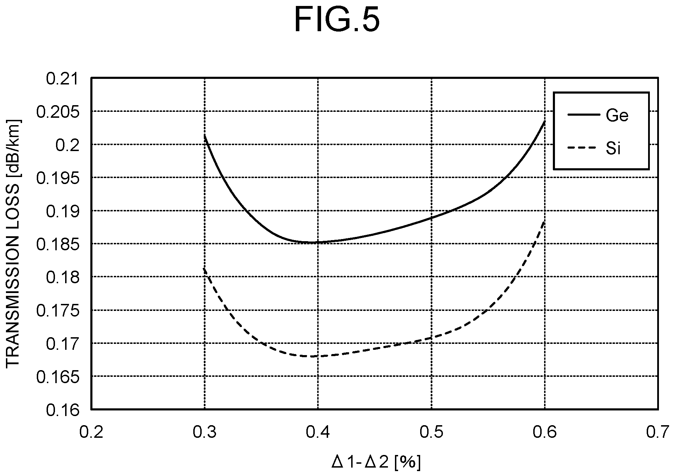

A transmission loss will be described with reference to FIG. 5. FIG. 5 is a diagram illustrating one example of a relationship between (Δ1-Δ2) and transmission loss. In addition, the transmission loss is a value at a wavelength of 1550 nm. Furthermore, in the example illustrated in FIG. 5, "Ge" indicates a typical transmission loss indicated in the case where germanium is added to the core portion 11 as a dopant, whereas "Si" is a typical transmission loss indicated in the case where the core portion 11 is made of pure silica glass.

As can be understood from FIG. 5, in both of the cases of "Ge" and "Si", in the case where (Δ1-Δ2) is equal to or larger than 0.45%, the transmission loss tends to be increased as (Δ1-Δ2) is increased, and in the case where (Δ1-Δ2) exceeds 0.55%, the transmission loss tends to be sharply increased as (Δ1-Δ2) is increased. Furthermore, in the case where (Δ1-Δ2) is too large, an amount of the dopant to be added is increased, so that it is difficult to manufacture an optical fiber. Accordingly, in terms of a transmission loss, it is preferable that (Δ1-Δ2) is equal to or less than 0.54%, and it is more preferable that (Δ1-Δ2) is equal to or less than 0.44%.

In the following, a preferable range of b/a will be described with reference to FIG. 3. As can be understood from FIG. 3, in the case where b/a is 2, the existence of the lowest value of λcc is not confirmed even if (Δ1-Δ2) is increased to 0.55%, whereas, in the case where b/a is 2.5, the existence of the lowest value has been confirmed up to 0.54% when (Δ1-Δ2) is made to be changed to 0.56%. Accordingly, as described above, by considering that the preferable value for (Δ1-Δ2) is equal to or less than 0.54%, it is preferable that b/a is equal to or larger than 2.5. Furthermore, if b/a is 3.9, the value of (Δ1-Δ2) indicating that λcc is within 10 nm from the lowest value is 0.36%. Accordingly, as described above, by considering that the preferable value for (Δ1-Δ2) is equal to or larger than 0.36%, it is preferable that b/a is equal to or less than 3.9. In addition, by further considering that (Δ1-Δ2) is more preferably equal to or larger than 0.37% and equal to or less than 0.44%, b/a is preferably 2.8 or more and is preferably 3.8 or less.

In addition, regarding Δ2, it is possible to implement a satisfactory property in terms of a larger Aeff and a lower cutoff wavelength as long as Δ2 is equal to or larger than -0.23% and equal to or less than -0.08%, which is preferable.

Table 1 is a list of values of (Δ1-Δ2), in b/a in a range of 2.5 to 4.0, indicating that the cutoff wavelength takes values within 10 nm from the lowest value and also takes values in the range in which the bending loss is not sharply increased.

**Table 1**

| | | | | | | |
|---|---|---|---|---|---|---|
| b/a | 2.5 | 2.6 | 2.7 | 2.8 | 2.9 | 3.0 |
| Δ1-Δ2 [%] | 0.42 - 0.54 | 0.40 - 0.51 | 0.38 - 0.48 | 0.37 - 0.46 | 0.36 - 0.44 | 0.36 - 0.43 |
| b/a | 3.1 | 3.2 | 3.3 | 3.4 | 3.5 | 3.6 |
| Δ1-Δ2 [%] | 0.36 - 0.42 | 0.36 - 0.41 | 0.36 - 0.40 | 0.36 - 0.40 | 0.36 - 0.39 | 0.36 - 0.39 |
| b/a | 3.7 | 3.8 | 3.9 | | | |
| Δ1-Δ2 [%] | 0.36 - 0.38 | 0.36 - 0.37 | 0.36 | | | |

Accordingly, as a method of designing the optical fiber 10, as indicated in, for example, Table 1, it is preferable that (Δ1-Δ2) is set in accordance with the values of b/a, and Δ1, Δ2, ΔClad, 2a, and 2b are set as structure parameters such that the optical property exhibits the desired property under the conditions of (Δ1-Δ2) that has been set. Furthermore, 2a may be appropriately changed in order to adjust λcc that is desired in accordance with the wavelength bandwidth used for optical transmission. Aeff is also changed in accordance with a change in 2a, and specifically, Aeff is also increased in accordance with an increase in 2a. In addition, it has been confirmed that the tendency exhibited in Table 1 indicates good repeatability in the range in which confinement of light with respect to the core portion is neither too strong nor too weak. Specifically, good repeatability has been confirmed as long as Aeff at the wavelength of 1550 nm is equal to or larger than 100 µm² and equal to or less than 160 µm². Therefore, Aeff of the optical fiber 10 at the wavelength of 1550 nm is preferably, for example, equal to or larger than 100 µm² and equal to or less than 160 µm².

In addition, as a method of manufacturing the optical fiber 10, it is preferable to manufacture an optical fiber by using a known method of manufacturing so as to satisfy the structure parameters that are set by using the method of designing the optical fiber 10. Specifically, the optical fiber 10 is easily manufactured by manufacturing an optical fiber preform using a known method that uses a vapor axial deposition (VAD) method, an outside vapor deposition (OVD) method, a modified chemical vapor deposition (MCVD) method, a plasma CVD method, or the like, and by drawing the optical fiber 10 by inserting the optical fiber preform into a drawing furnace.

For example, regarding the dopant, such as Ge, F, K, and Na, it is possible to add the dopant to the optical fiber preform by using gas that contains the dopant at the time of composition of soot. Furthermore, Cl can be added to the optical fiber preform by causing chlorine gas that is used at the time of dehydration process to remain. In addition, F can be added to the optical fiber preform by flowing fluorine gas when sintered glass is formed.

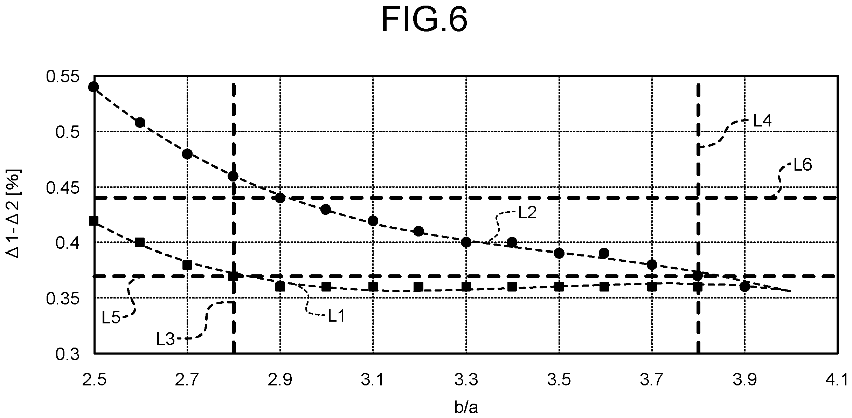

Furthermore, FIG. 6 is a diagram illustrating one example of preferable conditions about (Δ1-Δ2) and b/a. Specifically, FIG. 6 is a graph indicating that the maximum value of (Δ1-Δ2) related to each of the relationships of b/a illustrated in Table 1 is represented by using data points that are indicated by solid black circles and the minimum value of (Δ1-Δ2) related to each of the relationships of b/a illustrated in Table 1 is represented by using data points that are indicated by solid black squares. In addition, in FIG. 6, a curved line obtained by fitting the data points indicated by the solid black squares performed by using the least squares method is represented by a line L1, and a curved line obtained by fitting the data points indicated by the solid black circles by using the least squares method is represented by a line L2.

The line L1 can be represented by (Δ1-Δ2)=-0.0840(b/a)³+0.8739(b/a)²-3.0106(b/a)+3.7956. The line L2 can be represented by (Δ1-Δ2)=-0.0946(b/a) ³+0.9962(b/a)²-3.5477(b/a)+4.6605. Therefore, in the optical fiber 10, it is preferable that b/a is equal to or larger than 2.5, and (Δ1-Δ2) satisfies -0.0946(b/a)³+0.9962(b/a)²-3.5477(b/a)+4.6605≥(Δ1-Δ2)≥-0.0840(b/a)³+0.8739(b/a)²-3.0106(b/a)+3.7956 in terms of implementation of an increase in the effective core area and a lower cutoff wavelength. In other words, it is preferable that a combination of b/a and (Δ1-Δ2) is within a range surrounded by the line L1 and the line L2 in terms of implementation of an increase in the effective core area and a lower cutoff wavelength.

Furthermore, a line L3 represents b/a=2.8. In addition, a line L4 represents b/a=3.8. In addition, a line L5 represents (Δ1-Δ2)=0.37%. In addition, a line L6 represents (Δ1-Δ2)=0.44%. Therefore, it is preferable that a combination of b/a and (Δ1-Δ2) is within a range surrounded by the line L1 and the line L2, and is also within a range surrounded by the lines L3, L4, L5, and L6 in terms of implementation of a lower bending loss and a lower transmission loss, in addition to an increase in the effective core area and a lower cutoff wavelength.

Furthermore, if the refractive index of the side core layer 12 is made too low (Δ2 is made too small), an amount of the dopant to be added is increased, so that it is difficult to manufacture an optical fiber, and furthermore, a transmission loss is possibly increased as a result of (Δ1-Δ2) being increased as illustrated in FIG. 4. Accordingly, (Δ1-Δ2) is preferably equal to or less than 0.54%, and is more preferably equal to or less than 0.44% in terms of preventing the refractive index of the side core layer 12 from being decreased too much.

### (Examples)

As Examples, optical fibers with sample numbers 1 to 13 each having a W-type refractive index profile manufactured by drawing an optical fiber preform that has been manufactured by using the VAD method, and the optical property of each of the optical fibers is measured. Structure parameters and optical properties of each of the samples are listed in Table 2. In addition, "MFD" indicates a mode field diameter, and "Slope" indicates a dispersion slope. Furthermore, the items of MFD, Aeff, bending loss, chromatic dispersion, and Slope are values indicated at the wavelength of 1550 nm.

In addition, as a method of implementing the W-type refractive index profile, the core portion is constituted such that the refractive index is made higher than that of pure silica glass by adding Ge, the cladding portion is made of pure silica glass.

As indicated in Table 2, regarding all of the optical fibers with the sample numbers 1 to 13, (Δ1-Δ2) is equal to or larger than 0.36% and equal to or less than 0.54%, Δ2 is equal to or larger than -0.23% and equal to or less than -0.08%, and b/a is equal to or larger than 2.5 and equal to or less than 4. In addition, regarding all of the optical fibers with the sample numbers 1 to 13, 2a is set such that Aeff is equal to or larger than 100 µm² and equal to or less than 160 µm², and furthermore, λcc is set within 10 nm from the lowest value (see also Table 1). As a result, as indicated in Table 2, regarding all of the optical fibers with the sample numbers 1 to 13, it has been confirmed that it is possible to implement satisfactory properties indicating that λcc is equal to or less than 1530 nm and is relatively low, and the bending loss is equal to or less than 1 dB/m, or is, moreover, equal to or less than 0.5 dB/m.

For example, the optical fiber with the sample number 3 indicates that (Δ1-Δ2) is 0.36%, Δ2 is -0.11%, b/a is 3, 2a is 13.3 µm, Aeff is 123 µm², λcc is 1430 nm, and the bending loss is 0.36 dB/m. Furthermore, the optical fiber with the sample number 9 indicates that (Δ1-Δ2) is 0.43%, Δ2 is -0.16%, b/a is 3, 2a is 13.3 µm, Aeff is 116 µm², λcc is 1497 nm, and the bending loss is 0.04 dB/m. In addition, the optical fiber with the sample number 12 indicates that (Δ1-Δ2) is 0.39%, Δ2 is -0.14%, b/a is 3.0, 2a is 14.1 µm, Aeff is 130 µm², λcc is 1518 nm, and the bending loss is 0.06 dB/m. In addition, the optical fiber with the sample number 13 indicates that (Δ1-Δ2) is 0.39%, Δ2 is -0.15%, b/a is 3.2, 2a is 13.6 µm, Aeff is 124 µm², λcc is 1468 nm, and the bending loss is 0.10 dB/m.

Furthermore, regarding each of the optical fibers with the sample numbers 1 to 13, a connection property with another optical fiber and a cable property (a loss after the cabling, etc.) have been confirmed, which does not have any problem.

**Table 2**

| Sample No. | Δ1 | Δ2 | Δ1-Δ2 | b/a | 2a | MDF | Aeff | λcc | bending loss (φ30mm) | chromatic dispersion | Slope |
|---|---|---|---|---|---|---|---|---|---|---|---|
| | % | % | % | | µm | µm | µm² | nm | dB/m | ps/nm/km | ps/nm²/km |
| 01 | 0.27 | -0.20 | 0.47 | 2.5 | 13.3 | 11.5 | 114 | 1438 | 0.11 | 21.6 | 0.063 |
| 02 | 0.27 | -0.22 | 0.49 | 2.5 | 13.8 | 11.7 | 119 | 1491 | 0.05 | 21.8 | 0.063 |
| 03 | 0.25 | -0.11 | 0.36 | 3 | 13.3 | 12.1 | 123 | 1430 | 0.36 | 21.1 | 0.062 |
| 04 | 0.18 | -0.20 | 0.38 | 3 | 13.3 | 12.0 | 121 | 1315 | 0.95 | 21.4 | 0.062 |
| 05 | 0.27 | -0.11 | 0.38 | 3 | 12.0 | 11.3 | 106 | 1345 | 0.45 | 20.7 | 0.062 |
| 06 | 0.27 | -0.11 | 0.38 | 3 | 13.6 | 12.1 | 125 | 1525 | 0.08 | 21.2 | 0.063 |
| 07 | 0.28 | -0.11 | 0.39 | 3 | 13.3 | 11.9 | 120 | 1522 | 0.05 | 21.2 | 0.063 |
| 08 | 0.27 | -0.14 | 0.41 | 3 | 13.3 | 11.8 | 118 | 1492 | 0.04 | 21.3 | 0.063 |
| 09 | 0.27 | -0.16 | 0.43 | 3 | 13.3 | 11.7 | 116 | 1497 | 0.04 | 21.4 | 0.063 |
| 10 | 0.27 | -0.09 | 0.36 | 3.5 | 13.3 | 12.2 | 125 | 1523 | 0.06 | 21.0 | 0.063 |
| 11 | 0.27 | -0.11 | 0.38 | 3.5 | 13.3 | 12.0 | 122 | 1529 | 0.04 | 21.2 | 0.063 |
| 12 | 0.25 | -0.14 | 0.39 | 3.0 | 14.1 | 12.3 | 130 | 1518 | 0.06 | 21.6 | 0.063 |
| 13 | 0.24 | -0.15 | 0.39 | 3.2 | 13.6 | 12.1 | 124 | 1468 | 0.10 | 21.4 | 0.063 |

Furthermore, the present invention is not limited to the embodiment described above. The present invention also includes those formed by combining components of the embodiments as appropriate. In addition, further effects and modifications will readily occur to those skilled in the art. Therefore, wider aspects of the present invention are not limited to the embodiments described above, and various modifications can be made.

### Industrial Applicability

As described above, the present invention is suitable for use in an optical fiber.

### Reference Signs List

10 optical fiber
11 core portion
12 side core layer
13 cladding portion
L1, L2, L3, L4, L5, L6 line
P1, P2, P3 profile

## Claims

1. An optical fiber comprising:
a core portion;
a side core layer that surrounds an outer periphery of the core portion; and
a cladding portion that surrounds an outer periphery of the side core layer, wherein
Δ1>ΔClad>Δ2 and 0>Δ2 hold, where Δ1 is an average maximum relative refractive-index difference of the core portion with respect to an average refractive index of the cladding portion, Δ2 is a relative refractive-index difference of an average refractive index of the side core layer with respect to the average refractive index of the cladding portion, and ΔClad is a relative refractive-index difference of the average refractive index of the cladding portion with respect to pure silica glass,
an effective core area at a wavelength of 1550 nm is equal to or larger than 100 µm² and equal to or less than 160 µm²,
(Δ1-Δ2) is equal to or larger than 0.36% and equal to or less than 0.54%,
Δ2 is equal to or larger than -0.23% and equal to or less than -0.08%,
b/a is equal to or larger than 2.5 and equal to or less than 3.9 when a core diameter of the core portion is 2a and an outer diameter of the side core layer is 2b, and
the (Δ1-Δ2) is a value such that a cutoff wavelength is within 10 nm from a lowest value.

2. The optical fiber according to claim 1, wherein the (Δ1-Δ2) satisfies -0.0946(b/a)³+0.9962(b/a)²-3.5477(b/a)+4.6605≥(Δ1-Δ2)≥-0.0840(b/a)3+0.8739(b/a)²-3.0106(b/a)+3.7956.

3. The optical fiber according to claim 1 or 2, wherein the (Δ1-Δ2) is equal to or larger than 0.37% and equal to or less than 0.44%.

4. The optical fiber according to any one of claims 1 to 3, wherein the b/a is equal to or larger than 2.8 and equal to or less than 3.8.

5. A method of designing an optical fiber that includes a core portion, a side core layer that surrounds an outer periphery of the core portion, and a cladding portion that surrounds an outer periphery of the side core layer, and in which Δ1>ΔClad>Δ2 and 0>Δ2 hold, where Δ1 is an average maximum relative refractive-index difference of the core portion with respect to an average refractive index of the cladding portion, Δ2 is a relative refractive-index difference of an average refractive index of the side core layer with respect to the average refractive index of the cladding portion, and ΔClad is a relative refractive-index difference of the average refractive index of the cladding portion with respect to pure silica glass, the method comprising:
setting (Δ1-Δ2) to a value such that a cutoff wavelength is within 10 nm from a lowest value in accordance with a value of b/a when a core diameter of the core portion is 2a, and an outer diameter of the side core layer is 2b; and
setting, as a structure parameter, the Δ1, the Δ2, the ΔClad, the core diameter of the core portion, and the outer diameter of the side core layer such that an optical property exhibits a desired property under a condition of the set (Δ1-Δ2).

6. A method of manufacturing an optical fiber such that the structure parameter that has been set in the method of designing the optical fiber according to claim 5 is satisfied.
